# EUROPÄISCHE PATENTSCHRIFT

(11) **EP 1 204 691 B1**
(45) Veröffentlichungstag und Bekanntmachung des Hinweises auf die Patenterteilung: **01.10.2003**
(21) Anmeldenummer: 00944041.3
(22) Anmeldetag: 17.07.2000
(51) Int. Cl.: C08G 18/80, C08G 18/32, C08G 18/00, C08G 18/20

(54) **LÖSEMITTELFREIE, RAUMTEMPERATURHÄRTENDE REAKTIVSYSTEME UND IHRE VERWENDUNG ZUR HERSTELLUNG VON KLEBSTOFFEN, DICHTUNGSMASSEN, VERGUSSMASSEN, FORMTEILEN ODER BESCHICHTUNGEN**
SOLVENT-FREE, ROOM TEMPERATURE CURING REACTIVE SYSTEMS AND THE USE THEREOF IN THE PRODUCTION OF ADHESIVES, SEALING AGENTS, CASTING COMPOUNDS, MOLDED ARTICLES OR COATINGS
SYSTEMES REACTIFS EXEMPTS DE SOLVANTS ET DURCISSANT A TEMPERATURE AMBIANTE ET LEUR UTILISATION POUR LA PRODUCTION D'ADHESIFS, DE MASSES D'ETANCHEITE, DE MASSES DE REMPLISSAGE, DE PIECES MOULEES OU DE REVETEMENTS

(30) Priorität: 28.07.1999 DE 19935325
(43) Veröffentlichungstag der Anmeldung: 15.05.2002
(73) Patentinhaber: Bayer Aktiengesellschaft, 51368 Leverkusen (DE)
(72) Erfinder: TILLACK, Jörg, D-40764 Langenfeld (DE); PUETZ, Wolfgang, D-46569 Hünxe (DE); SCHMALSTIEG, Lutz, D-50676 Köln (DE)
(86) Internationale Anmeldenummer: EP0006801
(87) Internationale Veröffentlichungsnummer: WO01009219

(56) Entgegenhaltungen:
- EP-A- 0 159 488
- EP-A- 0 688 803
- EP-A- 0 950 675
- DE-A- 2 152 606
- DE-A- 3 023 202
- US-A- 3 912 566

## Beschreibung

Die vorliegende Erfindung betrifft neuartige, lösemittelfreie, raumtemperaturhärtende Reaktivsysteme auf Basis von blockierten Polyisocyanaten, organischem Amin mit mindestens zwei primären Aminogruppen, Verbindungen mit Oxirangruppen und 2,3-Dimethyl-3,4,5,6-tetrahydropyrimidin sowie Verfahren zur Herstellung dieser lösemittelfreien, raumtemperaturhärtenden Reaktivsysteme.

Außerdem betrifft die vorliegende Erfindung die Verwendung dieser lösemittelfreien Reaktivsysteme zur Herstellung von bei Raumtemperatur härtenden Klebstoffen, Dichtungsmassen, Vergußmassen, Formteilen oder Beschichtungen, z.B. zum Beschichten von Ballasttanks.

Polyamin/Epoxidharz-Systeme zeichnen sich u.a. durch exzellente Metallhaftung, sehr gute Chemikalienbeständigkeit und hervorragende Korrosionsschutzeigenschaften aus. Bei lösemittelhaltigen Formulierungen und Pulverlacksystemen können durch den Einsatz von Epoxidharzen mit hohen Molmassen und/oder Polyaminoamiden, z.B. auf der Basis von Dimerfettsäuren, als Härter vernetzte Filme mit hoher Flexibilität erhalten werden. Beschichtungen auf der Basis von lösemittelfreien Flüssigharzen und lösemittelfreien, aminischen Härtern sind aufgrund der niedrigen Molmassen der Epoxidharze und der daraus resultierenden hohen Netzwerkdichte spröde. Daher kommen in lösemittelfreien Formulierungen heutzutage z.B. Teerersatzstoffe, z.B. Cumaronharze, zur Plastifizierung zum Einsatz. Insbesondere bei Verwendung größerer Mengen an Kohlenwasserstoffharzen neigen derartige Beschichtungen, infolge Migration der nichtfunktionellen Bestandteile, zur Langzeitversprödung.

Eine gute und dauerhafte Elastifizierung der Epoxidharze lässt sich durch Kombination mit Polyurethanen erreichen. So wurden z. B. in der DE-A 2 338 256 hochmolekulare aminterminierte Polyetherurethanhamstoffe durch Reaktion von freien Isocyanatgruppen enthaltenden Prepolymeren mit Aminen in stark verdünnten Lösungen hergestellt und anschließend mit Epoxidharzen ausgehärtet.

Der Einsatz der hierzu erforderlichen, insbesondere aromatischen Lösungsmittel ist in der Praxis sowohl vom technischen als auch physiologischen Standpunkt aus nachteilig. Andererseits ist die Viskosität der lösemittelfreien Reaktionsprodukte, wie sie gemäß der DE-A 2 338 256 gezielt hergestellt werden, für die Anwendung in der Praxis zu hoch.

In der DE-A 2 418 041 wird ein Verfahren zur Herstellung von elastifizierten Formteilen und Flächengebilden beschrieben, gemäß welchem Epoxid- mit Aminverbindungen umgesetzt werden, die durch Hydrolyse prepolymerer Ketimine bzw. Enamine erhalten werden. Mit diesem Verfahren sind chemikalienfeste, gut haftende Duromere mit verbesserten Eigenschaften herstellbar.

Das in dieser Veröffentlichung beschriebene Verfahren ist jedoch verfahrenstechnisch aufwendig und somit teuer.

Die DE-A 2 152 606 beschreibt Reaktivsysteme auf Basis Alkylphenol-blockierter Polyisocyanate und Polyamine, die gegebenenfalls auch in Kombination mit Epoxidharzen ausgehärtet werden können. Auch diese Reaktivsysteme sind mit einigen anwendungstechnischen Nachteilen behaftet: Zum einen haben die Reaktivsysteme eine relativ hohe Viskosität, zum anderen ist das freiwerdende Blockierungsmittel von vergleichsweise niedrigem Molekulargewicht, so dass es mit der Zeit aus der Beschichtung auswandert, was zu Haftungsproblemen führen kann. Außerdem genügt das Niveau der mechanischen Eigenschaften nicht allen Anforderungen der Technik.

Um eine gezielte Reaktion von Polyisocyanatprepolymeren mit überschüssigen Mengen Diamin zu ermöglichen, wurde daher vielfach vorgeschlagen, die Polyisocyanate in blockierter Form einzusetzen, so z.B. beschrieben in CA-A 1 219 986, EP-A 293 110 oder EP-A 82 983. All diesen Veröffentlichungen ist gemeinsam, dass als bevorzugte Blockierungsmittel Phenole oder substituierte Phenole eingesetzt werden. Nach erfolgter Reaktion mit den Polyaminen können diese Substanzen aufgrund ihres hohen Siedepunkts nicht oder nur unvollständig destillativ aus dem Reaktionsgemisch entfernt werden. Das Verbleiben der gegebenenfalls substituierten Phenole in der Abmischung bzw. in der Kunststoffmasse führt aber zu den bereits erwähnten Nachteilen.

In den letztgenannten Veröffentlichungen wird zwar darauf hingewiesen, dass prinzipiell auch die anderen in der Polyurethanchemie üblichen Blockierungsmittel verwendet werden können. Solche in der Polyurethanchemie gebräuchlichen Blockierungsmittel sind Oxime, Caprolactam, Malonsäureester und Acetessigester. Da keines dieser Blockierungsmittel im Verlauf der Epoxidhärtung in das Polymergerüst eingebaut werden kann, und derartige Verbindungen normalerweise keine Verwendung in der herkömmlichen Amin-Epoxid-Chemie finden, bietet die Verwendung solcher Blockierungsmittel anstelle der bevorzugt eingesetzten, gegebenenfalls substituierten Phenole, keine großen Vorteile.

Gemäß EP-A 457 089 werden dagegen sekundäre Amine mit vorzugsweise niedrigem Siedepunkt als Blockierungsmittel eingesetzt. Verbleiben diese Amine nach der Deblockierung in der Reaktionsmischung, kommt es leicht zu einer Geruchsbelästigung. Nach dem Einsatz in Epoxid-Systemen kann das sekundäre Amin zwar prinzipiell in das System eingebaut werden, dies wird allerdings vor allem bei Anwendungen bei tiefen Temperaturen (z.B. Raumtemperatur) relativ langsam geschehen, wodurch ein Teil der Amine die Applikation verlassen wird.

In einer besonders bevorzugten Anwendung wird das aminische Blockierungsmitlel nach der Deblockierung aus dem Reaktionsgemisch abdestilliert. Diese Verfahrensweise führt zwar zu Produkten ohne Geruchsbelästigung, ist aber sehr aufwendig und somit teuer.

Es war daher die der Erfindung zugrundeliegende Aufgabe, raumtemperaturhärtende Reaktivsysteme auf Basis von blockierten Polyisocyanaten, Polyaminen und Oxirangruppen-aufweisenden Verbindungen zur Verfügung zu stellen, die nicht mit den Nachteilen der Systeme des Standes der Technik behaftet sind.

Gegenstand der Erfindung sind lösemittelfreie, raumtemperaturhärtende Reaktivsysteme bestehend aus
A) einer Polyisocyanatkomponente, bestehend aus mindestens einem organischen Polyisocyanat des Molekulargewichtsbereichs (ohne Einbeziehung des Blockierungsmittels) von 168 bis 25000, dessen NCO-Gruppen zu mindestens 95 Mol% durch Reaktion mit mindestens einem, phenolische OH-Gruppen aufweisenden Kohlenwasserstoffharz mit einem Hydroxylgruppengehalt, berechnet als OH, Molekulargewicht = 17, von 0,1% bis . 10,0% reversibel blockiert sind,
B) mindestens einem organischen Amin mit mindestens 2 primären Aminogruppen,
C) Oxirangruppen aufweisende Verbindungen, die im Durchschnitt mehr als eine Epoxidgruppe pro Molekül enthalten
   und
D) 2,3-Dimethyl-3,4.5,6-tetrahydropyrimidin der Formel (1) 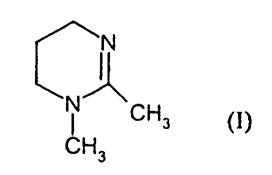 als Katalysator.

Gegenstand der Erfindung ist auch die Verwendung dieser lösemittelfreien, raumtemperaturhärtenden Reaktivsysteme, gegebenenfalls in Kombination mit den in der Kunststoff- und Beschichtungstechnologie üblichen Hilfs- und Zusatzstoffen, zur Herstellung von Klebstoffen, Dichtungsmassen, Vergußmassen, Formteilen oder Beschichtungen.

Der Erfindung liegt die überraschende Beobachtung zugrunde, dass in Gegenwart des 2,3-Dimethyl-3,4,5,6-tetrahydropyrimidins der Formel (I) als Katalysator die Reaktion von Epoxidharz/Amin und blockiertem Isocyanat/Amin so eingestellt werden kann, dass die erfindungsgemäßen lösemittelfreien, raumtemperaturhärtenden Reaktivsysteme einen einheitlichen Film ergeben.

Geeignete Polyisocyanate zur Herstellung der Komponente A) sind organische Polyisocyanate oder Polyisocyanatgemische mit einem (mittleren), aus Isocyanatgehalt und Funktionalität bestimmten Molekulargewicht von 168 bis 25 000, vorzugsweise 1 000 bis 12 000. Geeignete Ausgangspolyisocyanate sind die aus der Polyurethanchemie an sich bekannten Isocyanate wie Hexamethylendiisocyanat, Isophorondiisocyanat, Dicyclohexylmethandiisocyanat, die isomeren Diphenylmethandiisocyanate sowie deren höheren Homologen wie sie durch Phosgenierung von Anilin/Formaldehyd-Kondensationsprodukten entstehen, 2,4-, und 2,6-Toluylendiisocyanat sowie deren technische Gemische. Ebenfalls geeignet sind die an sich bekannten Folgeprodukte der genannten Isocyanate mit Biuret-, Isocyanurat-, Iminooxadiazindion-, Uretdion-, Allophanat und/oder Urethanstruktur.

Vorzugsweise handelt es sich bei den Polyisocyanaten zur Herstellung der Ausgangsverbindungen A) um Isocyanatgruppen aufweisende Prepolymere, wie sie in an sich bekannter Weise durch Umsetzung von nieder- oder höhermolekularen Polyhydroxylverbindungen mit überschüssigen Mengen der vorstehend genannten Dioder Polyisocyanate oder auch mit einem großen Überschuss der genannten Di- und Polyisocyanate und anschließende Entfernung des überschüssigen Polyisocyanates z.B. durch Dünnschichtdestillation erhalten werden können. Ganz besonders bevorzugt werden zur Synthese der Prepolymeren aromatische Polyisocyanaten des Molekulargewichtsbereichs 174 bis 300 eingesetzt. Die Herstellung der Prepolymeren erfolgt im allgemeinen bei 40 bis 140°C, gegebenenfalls unter Mitverwendung von aus der Polyurethanchemie an sich bekannten Katalysatoren, wie beispielsweise metallorganischen Verbindungen wie Zinn(II)octoat, Dibutylzinn(II)diacetat, Dibutylzinn(II)dilaurat oder tertiären Aminen wie Triethylamin oder Diazabicyclooctan.

Zur Herstellung derartiger Prepolymere eignen sich niedermolekulare Polyhydroxylverbindungen des Molekulargewichtsbereichs 62 bis 299 wie beispielsweise Ethylenglykol, Propylenglykol-1,3- und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole.

Vorzugsweise werden jedoch zur Herstellung der Prepolymeren höhermolekulare Polyhydroxylverbindungen des Molekulargewichtsbereichs 300 bis 20 000, vorzugsweise 1 000 bis 8 000, der aus der Polyurethanchemie an sich bekannten Art eingesetzt. Höhermolekulare Polyhydroxylverbindungen zur Herstellung der Prepolymeren sind beispielsweise die den gemachten Angaben entsprechenden Polyesterpolyole auf Basis von niedermolekularen einfachen Alkoholen der bereits beispielhaft genannten Art und mehrbasischen Carbonsäuren wie beispielsweise Adipinsäure, Sebacinsäure, Phthalsäure. Isophthalsäure; Tetrahydrophthalsäure, Hexahydrophtalsäure, Maleinsäure, den Anhydriden derartiger Säuren oder beliebigen Gemischen derartiger Säuren bzw. Anhydriden. Auch obigen Angaben entsprechende Hydroxylgruppen-aufweisende Polylactone, insbesondere Poly-ε-caprolactone sind zur Herstellung der Prepolymeren bzw. Semiprepolymeren geeignet.

Zur Herstellung der Isocyanatgruppen aufweisenden Prepolymeren ebenfalls gut geeignet sind die den obigen Ausführungen entsprechenden Polyetherpolyole, wie sie in an sich bekannte Weise durch Alkoxylierung von geeigneten Startermolekülen zugänglich sind. Geeignete Startennoleküle sind beispielsweise die oben bereits genannten einfachen Polyole, Wasser, organische Polyamine mit mindestens zwei N-H-Bindungen oder beliebige Gemische derartiger Startermoleküle. Für die Alkoxylierungsreaktion geeignete Alkylenoxide sind insbesondere Ethylenoxid und/oder Propylenoxid, die in beliebiger Reihenfolge oder auch im Gemisch bei der Alkoxylierungsreaktion eingesetzt werden können.

Auch die den oben gemachten Angaben entsprechenden Polytetramethylenglykolpolyether, wie sie in bekannter Weise durch kationische Polymerisation von Tetrahydrofuran zugänglich sind, sind gut zur Herstellung der Prepolymeren geeignet.

Zur Herstellung der Prepolymeren ferner geeignet sind die den obigen Ausführungen entsprechenden, Hydroxylgruppen-aufweisenden Polycarbonate, wie sie beispielsweise durch Umsetzung von einfachen Diolen der oben genannten Art mit Diarylcarbonaten, wie beispielsweise Diphenylcarbonat oder Phosgen hergestellt werden können.

Geeignet zur Herstellung der NCO-Gruppen aufweisenden Prepolymere sind femer Polythioetherpolyole, wie sie zum Beispiel durch Polykondensation des Thiodiglykols mit sich selbst oder mit Diolen und/oder Polyolen der genannten Art erhalten werden können.

Ferner eignen sich Polyacctale, wie z.B. Polykondensationsprodukte aus Formaldehyd und Diolen bzw. Polyolen der genannten Art, wie sie unter Verwendung von sauren Katalysatoren wie Phosphorsäure oder p-Toluolsulfonsäure erhalten werden können.

Selbstverständlich können auch Gemische der beispielhaft genannten Hydroxylverbindungen zur Herstellung der Prepolymeren eingesetzt werden.

Besonders bevorzugte Polyisocyanate zur Herstellung der beim erfindungsgemäßen Verfahren eingesetzten Ausgangsverbindungen A) sind Prepolymere auf Basis aromatischer Polyisocyanate der vorstehend genannten Art, z.B. 2,4- und/oder 2,6-Toluylendiisocyanat.

Zur Herstellung der erfindungsgemäß als Komponente A) eingesetzten blockierten Polyisocyanate geeignete phenolische OH-Gruppen aufweisende Kohlenwasserstoffharze sind solche der allgemein bekannten Art wie sie beispielhaft beschrieben werden in Ullmanns Encyklopädie der technischen Chemie, 4. Auflage, Bd. 12, Seite 539 bis 545, (Verlag Chemie, Weinheim 1976), Kirk-Othmer, Encyclopedia of Chemical Technology, 3. Auflage, Bd. 12, Seite 852 bis 869, (John Wiley & Sons, New York 1980) oder Encyclopedia of Polymer Science and Engineering, Bd. 7, Seite 758 bis 782, (John Wiley & Sons, New York 1987). Beispiele für geeignete phenolische OH-Gruppen aufweisende Kohlenwasserstoffharze sind Cumaron-Inden-Harze, Petroleumharze oder Terpenharze.

Derartige phenolische OH-Gruppen aufweisende Kohlenwasserstoffharze werden typischerweise hergestellt durch Copolymerisation von ungesättigten Kohlenwasserstoffen der nachstehend genannten Art mit Phenol in Gegenwart von starken Säuren oder Katalysatoren vom Friedel-Crafts-Typ. Geeignete ungesättigte Kohlenwasserstoffe zur Herstellung der erfindungsgemäß einsetzbaren OH-funktionellen Kohlenwasserstoffharze sind die bei der Crackung von Naphtha oder Gasöl anfallenden Kohlenwasserstoffe wie beispielsweise Buten, Butadien, Penten, Piperylen, Isopren, Cyclopentadien, Styrol, α-Methylstyrol, Vinyltoluol, Dicyclopentadien, Methyldicyclopentadien, Inden, Methylinden. Als ungesättigte Kohlenwasserstoffe, die zur Herstellung der erfindungsgemäß einsetzbaren OH-funktionellen Kohlenwasserstoffharze einsetzbar sind, eignen sich außerdem Terpenharze wie beispielsweise α-Pinen, β-Pinen, Dipenten, D-Limonen oder Terpentin. Einsetzbare Kohlenwasserstoffharze weisen einen Hydroxylgruppengehalt, berechnet als OH, Molekulargewicht = 17, von 0,1% bis 10,0% und bevorzugt einen Hydroxylgruppengehall von 1,0% bis 6,0% auf. Besonders bevorzugt werden bei Raumtemperatur flüssige Kohlenwasserstoffharze mit einem Hydroxylgruppengehalt von 1,5% bis 4,0% zur Herstellung der Komponente A) eingesetzt.

Die Herstellung der erfindungsgemäß als Komponente A) geeigneten Polyisocyanate mit reversibel blockierten Isocyanatgruppen erfolgt durch Umsetzung von organischen Polyisocyanaten der vorstehend genannten Art bei Temperaturen von 40°C bis 150°C, vorzugsweise bei 50°C bis 100°C mit vorstehend näher charakterisierten phenolische OH-Gruppen aufweisenden Kohlenwasserstoffharzen. Die Menge des bei der Blockierungsreaktion eingesetzten, phenolische OH-Gruppen aufweisenden Kohlenwasserstoffharzes sollte zumindest 95 Mol% der Menge der zu blockierenden NCO-Gruppen entsprechen. Ein geringer Überschüss an Blockierungsmittel kann zweckmäßig sein, um eine vollständige Reaktion aller lsocyanatgruppen zu gewährleisten. In der Regel beträgt der Überschuss nicht mehr als 20 Mol%, vorzugsweise nicht mehr als 15 Mol% und besonders bevorzugt nicht mehr als 10 Mol%, bezogen auf die zu blockierenden Isocyanatgruppen. Die Blockierungsreaktion wird vorzugsweise unter Mitverwendung von aus der Polyurethanchemie an sich bekannten Katalysatoren, wie beispielsweise matallorganischen Verbindungen wie Zinn(II) octoat, Dibulylzinn (II) diacetat, Dibutylzinn(lI) dilaurat oder tertiären Aminen wie Triethylamin oder Diazabicyclooctan durchgeführt. Die Blockierungsreaktion kann gegebenenfalls in Anwesenheit üblicher inerter Lösungsmittel, bzw. Lacklösungsmitteln wie beispielsweise Ethylacelat, Butylacetat, Methoxypropylacetat, Methylethylketon, Methylisobutylketon, Toluol, Xylol, aromatische oder (cyclo-)aliphatische Kohlenwasserstoffgemische oder beliebigen Gemischen derartiger Lösungsmittel durchgeführt werden. Diese Lösemittel bzw. Lacklösemittel werden dann im Anschluss an die Synthese zum Erhalt von lösemittelfreien Reaktivsystemen z.B. destillativ wieder abgetrennt. Bevorzugt werden diese Umsetzungen lösemittelfrei durchgeführt.

Bei der Komponente B) der erfindungsgemäßen lösemittelfreien, raumtemperaturhärtenden Reaktivsysteme handelt es sich um Polyamine, die mindestens zwei primäre Aminogruppen pro Molekül und gegebenenfalls noch sekundäre Amingruppen aufweisen und vorzugsweise ein (mittleres) Molekulargewicht von 60 bis 500 besitzen. Geeignet sind beispielsweise Ethylendiamin, 1,2- und 1,3- Diaminopropan, 1,4-Diaminobutan, 1,6-Diaminohexan, 2,2,4- und/oder 2,4,4-Trimethylhexamethylendiamin, die isomeren Xylylendiamine, 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4'-diaminodicyclohexylmethan, 3-Aminomethyl-3,3,5-trimethylcyclohexylamin (Isophorondiamin), 3(4)-Aminomethyl- 1 -methylcyclohexylamin oder technisches Bisaminomethyltricyclodecan (TCD-Diamin) weiterhin auch solche Polyamine, die neben mindestens zwei primären Aminogruppen noch sekundäre Aminogruppen aufweisen wie beispielsweise Diethylentriamin oder Triethylentetramin.

Besonders bevorzugt werden die Polyamine, insbesondere Diamine des genannten Molekulargewichtsbereichs, eingesetzt, die einen oder mehrere cycloaliphatische Ringe aufweisen. Hierzu gehören beispielsweise 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4'-diaminodicyclohexylmethan, 3-Aminomethyl-3,3,5-trimethylcyclohexylamin (Isophorondiamin), 3(4)-Aminomethyl- l -methylcyclohexylamin oder technisches Bisaminomethyllricyclodecan.

Ebenfalls einsetzbar als Komponente B) sind Addukte, die durch Umsetzung eines Überschusses der genannten Polyamine mit Epoxidharzen der nachstehend genannten Art hergestellt werden.

Weiterhin einsetzbar als Komponente B) sind Polyetheramine, die durch Umsetzung von Polyetherpolyolen mit Ammoniak hergestellt werden und beispielsweise von der Fa. Huntsman unter dem Handelsnamen Jeffamin® vertrieben werden.

Desweiteren sind auch Polyamidharze als Komponente B) geeignet. Derartige Polyamidharze, zu denen die Polyaminoamide und die Polyaminoimidazoline gehören, werden u.a. von Henkel unter dem Handelsnamen "Versamid®" vertrieben.

Selbstverständlich ist es auch möglich Gemische der genannte Polyamine als Komponente B) einzusetzen.

Komponente C) sind Oxirangruppen-aufweisende Verbindungen. Geeignete Oxirangruppen-aufweisende Verbindungen sind Epoxidharze, die im Durchschnitt mehr als eine Epoxidgruppe pro Molekül enthalten. Beispiele für geeignete Epoxidharze sind Glycidyleiher von mehrwertigen Alkoholen wie z.B. Butandiol, Hexandiol, Glycerin, hydriertem Diphenylolpropan oder mehrwertigen Phenolen wie z.B. Resorcin, Diphenylolpropan-2,2 (Bisphenol A) Diphenylolmethan (Bisphenol F) oder Phenol-Aldehyd-Kondensaten. Es können auch Glycidylester mehrwertiger Carbonsäuren, wie Hexahydrophtalsäure oder dimerisierte Fettsäure verwendet werden.

Besonders bevorzugt ist der Einsatz von flüssigen Epoxidharzen auf Basis von Epichlorhydrin und Diphenylolpropan-2,2 (Bisphenol A) oder Diphenylolmethan (Bisphenol F) bzw. deren Mischungen. Gewünschtenfalls kann mit monofunktionellen Epoxidverbindungen die Viskosität der Mischungen gesenkt werden und dadurch die Verarbeitung verbessert werden. Beispiele hierfür sind aliphatische und aromatische Glycidylether wie Butylglycidylether, Phenylglycidylether oder Glycidylester wie Versaticsäureylycidylester oder Epoxide wie Styroloxid oder 1,2-Epoxidodecan.

Komponente D) ist das 2,3-Dimethyl-3,4,5,6-tetrahydropyrimidin der Formel (I) 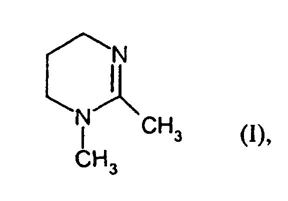 das z.B. nach der Lehre der DE-A 2 439 550 durch Umsetzung von N-Methyl-1,3-Propandiamin mit Acetessigsäurederivaten hergestellt werden kann. Es dient als Katalysator und wird bevorzugt in Mengen bis zu 5 Gew.-%, besonders bevorzugt in Mengen von 0,5 bis 3 Gew.-% und ganz besonders bevorzugt in Mengen von 0,7 bis 1,5 Gew.-%, bezogen auf die Summe der Komponenten A) und C), eingesetzt.

Zur Herstellung der gebrauchsfertigen Mischungen wird Komponente D) in der Regel in Komponente B) gegeben. Sollte Komponente C) vorhanden sein, kann vorzugsweise Komponente A) und C) zusammen gegeben werden. Desweiteren können den Komponenten A), C) bzw. den Mischungen aus A) + C) und B) + D) die üblichen Hilfs- und Zusatzmittel wie beispielsweise Füllstoffe, Verlaufshilfsmittel, Pigmente, Lösungsmittel, Reaktionsbeschleuniger oder Viskositätsregulatoren zugesetzt werden. Beispielhaft genannt seien Reaktionsbeschleuniger wie Salicylsäure, Bis-(dimethylamino-methyl)-phenol oder Tris-(dimethylaminomethyl)-phenol, Füllstoffe wie Sande, Gesteinsmehl, Kieselsäure, Asbestmehl, Kaolin, Talkum, Metallpulver (z.B. Fe), Teer, Teerpech, Asphalte, Korkschrote; Polyamide, Weichmacher wie beispielsweise Phthalsäureester oder andere Viskositätsregulatoren wie beispielsweise Benzylalkohol.

Falls es die Applikation erfordertich macht, können den erfindungsgemäßen, lösemittelfreien Beschiclitungssystenien selbstverständlich auch die dazu notwendige Menge Verdünnungsmittel zugesetzt werden.

Die erfindungsgemäßen lösemittelfreien, raumtemperaturhärtenden Reaktivsysteme eignen sich zur Herstcllung von Beschichtungen, Klebstoffen, Dichtungsmassen, Vergußmassen oder Formteilen auf allen Anwendungsgebieten, wo gute Haftung, Chemikalienfestigkeit, sowie hohe Schlag- und Stoßfestigkeit, verbunden mit guter Flexibilität und Elastizität gefordert werden. Besonders gut geeignet sind die erfindungsgemäßen Systeme als Korrosionsschutzbeschichtungen. Insbesondere bei Belastung mit aggressiven Medien, wie beispielsweise bei der Ballasttank-Beschichtung zeichnen sich die Systeme durch eine gute Naßhaftung und eine gute Haftung unter Kothodenschutzbedingungen aus.

Erfindungswesentlich ist hier, dass lediglich mit Hilfe des 2,3-Dimethyl-3,4,5,6-tetrahydropyrimidin als Katalysator die Reaktion von Epoxidharz/Amin und blockiertem Isocyanat / Amin so eingestellt werden kann, so dass die erfindungsgemäßen lösemittelfreien, raumtemperaturhärtenden Reaktivsysteme z.B. einen einheitlichen Film bei RT ergeben.

### Beispiele

Alle Prozentangaben beziehen sich, soweit nicht anders vermerkt, auf das Gewicht.

### Beispiel 1

1330 g eines Polyetherpolyols der OH-Zahl 42, hergestellt durch gleichzeitige Ethoxylierung und Propoxylierung (EO/PO-Verhältnis = 2:8) eines 2:1 Gemisches von Propylenglykol und Glycerin, werden mit 174 g 2,4-Diisocyanatotoluol 5 Stunden bei 80°C prepolymerisiert, bis der theoretische NCO-Gehalt von 2,8 % erreicht ist.
Anschließend setzt man 800 g eines handelsüblichen Kohlenwasserstoffharzes mit einem Hydroxylgruppengehalt von 2,25 % (Novares LA 700, Handelsprodukt der Fa. VFT AG, Duisburg) zu, katalysiert mit 0,2 g Zinn(II)octoat und rührt 10 Stunden bei 60°C. Nach dieser Zeit ist im IR-Spektrum kein freies Isocyanat mehr nachweisbar. Das erhaltene blockierte Isocyanatprepolymer besitzt folgende Kenndaten:

| | |
|---|---|
| blockierter NCO-Gehalt | 1,8% |
| Viskosität (23°C) | 62000 mPa·s |

### Beispiel 2

Das NCO-Prepolymer wird wie in Beispiel 1 beschrieben hergestellt. Die Blockierungsreaktion wird in analoger. Weise durchgeführt, jedoch werden 940 g eines anderen handelsüblichen Kohlenwasserstoffharzes mit einem Hydroxylgruppengehall von 1,9 % eingesetzt (Novares LA 300, Handelsprodukt der Fa. VFT AG, Duisburg). Das erhaltene blockierte Isocyanatprepolymer besitzt folgende Kenndaten:

| | |
|---|---|
| blockierter NCO-Gehalt | 1,7% |
| Viskosität (23°C) | 35000 mPa·s |

### Beispiel 3

381,3 g eines Polyetherpolyols mit der Funktionalität 2,6 und der OH-Zahl 43, hergestellt durch gleichzeitige Ethoxylierung und Propoxylierung (EO/PO-Verhältnis = 2:8) eines 2:1 Gemisches von Propylenglykol und Glycerin, und 845,6 g eines Polyetherdiols mit der OH-Zahl 29, hergestellt durch Propoxylierung von Propylenglykol und anschließender Ethoxylierung (EO/PO-Verhältnis = 2:8), werden nach Zusatz von 0,07 g 2-Chlorpropionsäure mit 126,8 g 2,4-Diisocyanato-toluol bei 60 - 65°C prepolymerisiert bis der theoretische NCO-Gehalt von 2,3 % erreicht ist.
Anschließend setzt man 645,9 g eines handelsüblichen Kohlenwasserstoffharzes mit einem OH-Gehalt von 1,8 % (Necirès EPX L2® , Handelsprodukt der Fa. Nevcin Polymers B. V., Uithoorn, Holland) zu, katalysiert mit 0,4 g Zinn(II)octoat und rührt bei 70 - 80°C bis der NCO-Gehalt unter 0,2 % liegt.

| | |
|---|---|
| Blockierter NCO-Gehalt | 1,5 % |
| Viskosität (23°C) | 24400 mPas |

### Beispiele 4 - 45

In den Beispielen wurde als Standard-Epoxydharze Epikote® 828, Handelsprodukt der Fa. Shell, Epoxydäquivalentgewicht 190, und als handelsüblicher Polyamin-Härter ein Addukt auf Basis Isophorondiamin/Epoxidharz mit einem Aminwert von 6,5 Eq/kg (Härter HY 847® , Handelsprodukt der Fa. Ciba Specialty Chemicals) mit den blockierten Isocyanat-Prepolymeren aus den Beispielen 1-3 sowie mit dem Katalysator vermischt und auf einem Deckel ca. 3 mm hoch ausgegossen.
Das Mischungsverhältnis EP-Harz/blockiertes NCO-Prepo/Polyamin war 60/40/24 bezogen auf Gewichtsteile. Die Katalysatorkonzentration betrug 1 % bezogen auf die Komponenten A) und C).

Anhand der Trübung, der bei Raumpcmperatur über Nacht ausgehärteten Formkörper, wurde die Verträglichkeit bestimmt.
Man kann leicht erkennen, dass lediglich mit Hilfe des 2,3-Dimethyl-3,4,5,6-tetrahydropyrimidin als Katalysator die Reaktion von Epoxidharz mit Amin und blockiertem Isocyanat mit Amin so eingestellt werden kann, so dass die erfindungsgemäßen lösemittelfreien Reaktivsysteme bei Raumtemperaturtrocknung über Nacht klare Formkörper ergeben.

| **Name** | **NCO-Prepo aus Bsp. 1** | **NCO-Prepo aus Bsp. 2** | **NCO-Prepo aus Bsp. 3** |
|---|---|---|---|
| **Beispiel** | **4** | **5** | **6** |
| 2-Methyl-2-azanorboman1) | trüb | trüb | trüb |
| **Beispiel** | **7** | **8** | **9** |
| 1,4-Diazabicyclo[2,2,2]octan¹) | trüb | trüb | trüb |
| **Beispiel** | **10** | **11** | **12** |
| N-Cocomorpholin¹) | trüb | trüb | trüb |
| **Beispiel** | **13** | **14** | **15** |
| Dimethylcyclohexylamin¹) | trüb | trüb | trüb |
| **Beispiel** | **16** | **17** | **18** |
| Dibutyltindilaurat¹) | trüb | trüb | trüb |
| **Beispiel** | **19** | **20** | **21** |
| Zinn octoat¹) | trüb | trüb | trüb |
| **Beispiel** | **22** | **23** | **24** |
| Triethylamin²) | trüb | trüb | trüb |
| **Beispiel** | **25** | **26** | **27** |
| N,N-Dimethyicyclohexylamin²⁾ | trüb | trüb | trüb |
| **Beispiel** | **28** | **29** | **30** |
| Triethylendiamin in Dipropylenglykol²) | trüb | trüb | trüb |
| **Beispiel** | **31** | **32** | **33** |
| 4-Methylmorpholin²) | trüb | trüb | trüb |
| **Beispicl** | **34** | **35** | **36** |
| 1-Methylimidazol²⁾ | trüb | trüb | trüb |
| **Beispiel** | **37** | **38** | **39** |
| Dimethylbenzylamin²) | trüb | trüb | trüb |
| **Beispiel** | **40** | **41** | **42** |
| 1,8-Diazobicyclo[5,4,0]undecene-7²) | trüb | trüb | trüb |
| **Beispiel** | **43** | **44** | **45** |
| 2,3-Dimethyl-3,4,5,6-tetrahydro- | klar | klar | klar |
| pyrimidin³) | | | |
| Bezugsquelle 1) Air Products and Chemicals. Inc. 2) BASF AG 3) gemäß DE-A 2 439 550 | | | |

## Patentansprüche

1. Lösemittelfreie, raumtemperaturhärtende Reaktivsysteme bestehend aus
A) einer Polyisocyanatkomponente, bestehend aus mindestens einem organischen Polyisocyanat des Molekulargewichtsbereichs (ohne Einbeziehung des Blockierungsmittels) von 168 bis 25000, dessen NCO-Gruppen zu mindestens 95 Mol% durch Reaktion mit mindestens einem, phenolische OH-Gruppen aufweisenden Kohlenwasserstoffharz mit einem Hydroxylgruppengehalt, berechnet als OH, Molekulargewicht = 17, von 0,1% bis 10,0% reversibel blockiert sind,
B) mindestens einem organischen Amin mit mindestens 2 primären Aminogruppen,
C) Oxirangruppen aufweisende Verbindungen, die im Durchschnitt mehr als eine Epoxidgruppe pro Molekül enthalten
und
D) 2,3-Dimethyl-3,4,5,6-tetrahydropyrimidin der Formel (I) 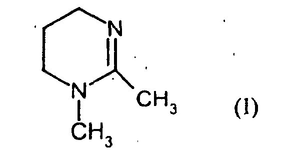
als Katalysator.

2. Lösemittelfreie, raumtemperaturhärtende Reaktivsysteme gemäß Anspruch 1, **dadurch gekennzeichnet, dass** die Komponente A) aus mindestens einem Isocyanatgruppen aufweisenden Prepolymeren auf Basis von (i) aromatische Polyisocyanaten des Molekulargewichtsbereichs 174 bis 300 und (ii) Etherund/oder Estergruppen aufweisenden organischen Polyhydroxylverbindungen des Molekulargewichtsbereichs 1 000 bis 8 000 besteht, dessen Isocyanatgruppen durch Reaktion mit mindestens einem phenolische OH-Gruppen aufweisenden Kohlenwasserstoffharz reversibel blockiert sind.

3. Lösemittelfreie, raumtemperaturhärtende Reaktivsysteme gemäß Anspruch 1, **dadurch gekennzeichnet, dass** die Isocyanatgruppen der Komponente A) durch Reaktion mit einem bei Raumtemperatur flüssigen, phenolische OH-Gruppen aufweisenden Kohlenwasserstoffharz mit einem Hydroxylgruppengehalt von 1,5 % bis 4,0 % reversibel blockiert sind.

4. Lösemittelfreie, raumtemperaturhärtende Reaktivsysteme gemäß Anspruch 1, **dadurch gekennzeichnet, dass** es sich bei der Komponente B) um mindestens ein Diamin mit mindestens einem cycloaliphatischen Ring mit einem maximalen Molekulargewicht von 500 handelt.

5. Reaktivsysteme gemäß Anspruch 1, **dadurch gekennzeichnet, dass** es sich bei der Komponente C) um flüssige Epoxidharze auf Basis von Epichlorhydrin und Diphenylolpropan-2.2 (Bisphenol A) oder Diphenylolmethan (Bisphenol F) bzw. deren Mischungen handelt.

6. Lösemittelfreie, raumtemperaturhärtende Reaktivsysteme nach Anspruch 1, **dadurch gekennzeichnet, dass** die Komponente D) in Mengen von 0,5 bis 3 Gew.-%, bezogen auf die Summe der Komponenten A) und C), eingesetzt wird.

7. Verfahren zur Herstellung der erfindungsgemäßen lösemittelfreien, raumtemperaturhärtenden Reaktivsysteme nach Anspruch 1 **dadurch gekennzeichnet, dass** die Komponenten A), B), und gegebenenfalls C) zusammengemischt werden.

8. Verfahren zur Herstcllung der erfindungsgemäßen lösemittelfreien, raumtemperaturhärtenden Reaktivsysteme nach Anspruch 1, **dadurch gekennzeichnet, dass** Komponente D) zunächst in Komponente B) gegeben wird und anschließend mit dem Komponenten A) und gegebenenfalls C) abgemischt wird.

9. Verwendung der lösemittelfreien Reaktivsysteme gemäß Anspruch 1, gegebenenfalls in Kombination mit den in der Kunststoff- und Beschichtungstechnologie üblichen Katalysatoren, Hilfs- und Zusatzstoffen zur Herstellung von bei Raumtemperatur härtenden Klebstoffen, Dichtungsmassen, Vergußmassen, Formteilen oder Beschichtungen.

10. Verwendung der lösemittelfreien Reaktivsysteme gemäß Anspruch 1 zum Beschichten von metallischen Substraten.

11. Verwendung der lösemittelfreien Reaktivsysteme gemäß Anspruch 1 für Korrosionsschutzbeschichtungen.

12. Verwendung der lösemittelfreien Reaktivsysteme gemäß Anspruch 1 für Ballasttankbeschichtungen.

## Claims

1. Solvent-free, room-temperature-curing reactive systems composed of
A) a polyisocyanate component composed of at least one organopolyisocyanate of the molecular weight range (without including the blocking agent) from 168 to 25,000, at least 95 mol% of whose NCO groups have been reversibly blocked by reaction with at least one hydrocarbon resin containing phenolic OH groups and having a hydroxyl group content, calculated as OH, molecular weight = 17, of from 0.1% to 10.0%,
B) at least one organic amine having at least two primary amino groups,
C) compounds containing oxirane groups, containing on average more than one epoxide group per molecule
and
D) 2,3-dimethyl-3,4,5,6-tetrahydropyrimidine of the formula (I) 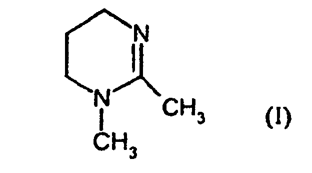
as catalyst.

2. Solvent-free, room-temperature-curing reactive systems according to Claim 1, **characterized in that** component A) is composed of at least one isocyanato-containing prepolymer based on (i) aromatic polyisocyanates of the molecular weight range 174 to 300 and (ii) organic polyhydroxyl compounds containing ether and/or ester groups, of the molecular weight range 1,000 to 8,000, whose isocyanate groups have been reversibly blocked by reaction with at least one hydrocarbon resin containing phenolic OH groups.

3. Solvent-free, room-temperature-curing reactive systems according to Claim 1, **characterized in that** the isocyanate groups of component A) have been reversibly blocked by reaction with a hydrocarbon resin which is liquid at room temperature, contains phenolic OH groups and has a hydroxyl group content of from 1.5% to 4.0%.

4. Solvent-free, room-temperature-curing reactive systems according to Claim 1, **characterized in that** component B) comprises at least one diamine having at least one cycloaliphatic ring with a maximum molecular weight of 500.

5. Reactive systems according to Claim 1, **characterized in that** component C) comprises liquid epoxy resins based on epichlorohydrin and 2,2-diphenylolpropane (bisphenol A) or diphenylolmethane (bisphenol F) or on mixtures thereof.

6. Solvent-free, room-temperature-curing reactive systems according to Claim 1, **characterized in that** component D) is used in amounts of from 0.5 to 3% by weight based on the sum of components A) and C).

7. Process for preparing the solvent-free, room-temperature-curing reactive systems of Claim 1, **characterized in that** components A), B) and if desired, C) are mixed together.

8. Process for preparing the solvent-free, room-temperature-curing reactive systems of Claim 1, **characterized in that** first component D) is added to component B) and then the mixture is blended with components A) and, if desired, C).

9. Use of the solvent-free reactive systems according to Claim 1, alone or in combination with the additives, auxiliaries and catalysts customary in polymer and coating technology, to prepare room-temperature-curing adhesives, sealants, casting compounds, mouldings or coatings.

10. Use of the solvent-free reactive systems according to Claim 1 to coat metallic substrates.

11. Use of the solvent-free reactive systems according to Claim 1 for anti-corrosion coatings.

12. Use of the solvent-free reactive systems according to Claim 1 for ballast tank coatings.

## Revendications

1. Systèmes réactifs exempts de solvant, durcissant à température ambiante, consistant en :
A) un composant polyisocyanate, consistant en au moins un polyisocyanate organique d'intervalle de poids moléculaire (sans introduction de l'agent de blocage) allant de 168 à 25 000, dont les radicaux NCO sont bloqués pour au moins 95% en moles, de manière réversible, par réaction avec au moins une résine hydrocarbure présentant des radicaux OH phénoliques avec une teneur en radicaux hydroxyle, calculée comme OH, poids moléculaire = 17, allant de 0,1% à 10,0%,
B) au moins une amine organique avec au moins 2 radicaux amino primaires,
C) des composés présentant des radicaux oxiranne, qui contiennent en moyenne, plus d'un radical époxyde par molécule, et
D) la 2,3-diméthyl-3,4. 5, 6-tétrahydropyrimidine de la formule (I) : 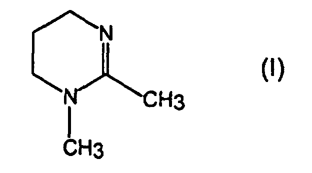
comme catalyseur.

2. Systèmes réactifs exempts de solvant, durcissant à température ambiante, suivant la revendication 1, **caractérisés en ce que** le composant A) consiste en au moins un prépolymère présentant des radicaux isocyanate, à base de (i) des polyisocyanates aromatiques d'intervalle de poids moléculaire allant de 174 à 300 et (ii) des composés polyhydroxylés organiques présentant des radicaux éther et/ou ester, d'intervalle de poids moléculaire allant de 1000 à 8000, dont les radicaux isocyanate sont bloqués de manière réversible par réaction avec au moins une résine hydrocarbure présentant des radicaux OH phénoliques.

3. Systèmes réactifs exempts de solvant, durcissant à température ambiante, suivant la revendication 1, **caractérisés en ce que** les radicaux isocyanate du composant A) sont bloqués de manière réversible, par réaction avec une résine hydrocarbure présentant des radicaux OH phénoliques, liquide à la température ambiante, avec une teneur en radicaux hydroxyle allant de 1,5% à 4,0%.

4. Systèmes réactifs exempts de solvant, durcissant à température ambiante, suivant la revendication 1, **caractérisés en ce que** le composant B) consiste en au moins une diamine avec au moins un cycle aliphatique, ayant un poids moléculaire maximum de 500.

5. Systèmes réactifs suivant la revendication 1, **caractérisés en ce que** le composant C) consiste en des résines époxyde liquides à base d'épichlorhydrine et de diphénylpropane-2,2 (bisphénol A) ou de diphénylolméthane (bisphénol F) ou de leurs mélanges.

6. Systèmes réactifs exempts de solvant, durcissant à température ambiante, suivant la revendication 1, **caractérisés en ce que** le composant D) est mis en oeuvre en une quantité allant de 0,5 à 3% en poids, sur base de la somme des composants A) et C).

7. Procédé de préparation des systèmes réactifs exempts de solvant, durcissant à température ambiante, suivant la revendication 1, **caractérisé en ce que** les composants A), B) et le cas échéant C) sont mélangés.

8. Procédé de préparation des systèmes réactifs exempts de solvant, durcissant à température ambiante, suivant la revendication 1, **caractérisé en ce que** le composant D) est ajouté au composant B) et ensuite, on mélange au composant A) et le cas échéant, au composant C) .

9. Utilisation des systèmes réactifs exempts de solvant, suivant la revendication 1, le cas échéant en combinaison avec les catalyseurs, additifs et auxiliaires usuels de la technologie des matières plastiques et des revêtements, pour la préparation d'adhésifs, de matériaux d'étanchéité, de masses de remplissage, d'articles moulés ou de revêtements durcissant à la température ambiante.

10. Utilisation des systèmes réactifs exempts de solvant, suivant la revendication 1, pour le revêtement de substrats métalliques.

11. Utilisation des systèmes réactifs exempts de solvant, suivant la revendication 1, pour des revêtements de protection contre la corrosion.

12. Utilisation des systèmes réactifs exempts de solvant, suivant la revendication 1,. pour des revêtements de ballast.
